# EUROPEAN PATENT SPECIFICATION

(11) **EP 0 548 747 B1**
(45) Date of publication and mention of the grant of the patent: **06.09.1995**
(21) Application number: 92121303.9
(22) Date of filing: 15.12.1992
(51) Int. Cl.: B60L 11/18, B60L 11/08

(54) **An electronic control circuit for induction electric motors driving electric vehicles**
Elektronischer Regelkreis für elektrische Induktionsmotoren zum Antrieb elektrischer Fahrzeuge
Circuit électronique de régulation pour moteurs électrique à induction entraînant des véhicules électriques

(30) Priority: 24.12.1991 IT TO911037
(43) Date of publication of application: 30.06.1993
(73) Proprietor: FIAT AUTO S.p.A., 10135 Torino (IT)
(72) Inventor: Guerzoni, Roberto, I-11045 Piossasco (Torino) (IT); Varrone, Piergiorgio, I-10025 Pino Torinese (TO) (IT)
(74) Representative: Lotti, Giorgio

(56) References cited:
- EP-A- 0 093 929
- EP-A- 0 217 411
- EP-A- 0 221 729
- WO-A-83/00464
- PROC. OF THE 15TH INTERSOCIETY ENERGY CONV. ENG. CONF., vol. 3, 22 August 1980, SEATTLE,WASHINGTON, US, pages 2070 - 2079; T. LATOS ET AL.: 'AN SCR INVERTER FOR ELECTRIC VEHICLES'

## Description

This invention relates to an electronic control circuit for induction electric motors driving electric vehicles.

As is well known, the problems connected with the range, performance and efficiency of electric vehicles powered by storage batteries are assuming ever increasing importance.

For this reason it is particularly advantageous to use three-phase alternating current induction motors with a short-circuited rotor.

In this respect, such motors have optimum characteristics in terms of efficiency, weight and constructional cost.

In addition because of the absence of brushes and commutators, induction motors with a short-circuited rotor are robust and are seldom subject to rating loss or faults due to wear.

Three-phase induction motors are not however intrinsically suitable for driving vehicles. This is because, in contrast to direct current motors, their rotation speed cannot be immediately regulated and they do not have an intrinsic ability to supply a high starting torque.

However, as it is disclosed in EP-A-0 217 411 if such motors are powered via an inverter able to convert the direct current of the storage battery into alternating current of variable frequency and voltage, their rotation speed and delivered drive torque can be varied at will.

In order to be able to use the motor not only at the rated torque but also at maximum torque, it is important to be able to set a nominal slip value which is then also automatically maintained constant during acceleration and deceleration.

Slip is defined as the standard difference between the synchronous speed and the rotor rotation speed, operation at constant slip enabling optimum motor efficiency to be achieved at all speeds.

This also applies when the motor is used as an induction generator, ie during braking.

An object of the present invention is to provide an electronic circuit for controlling induction electric motors for driving electric vehicles of the type and for the applications stated, which enables the speed and acceleration of an electric vehicle to be regulated in accordance with user requirements and independently of variations in the resistant torque.

A further object of the present invention is to provide an electronic circuit which enables the slip value to be maintained equal to a desired value during any operating stage, including the stage in which the motor operates as a generator.

These objects are attained by an electronic control circuit for induction electric motors driving electric vehicles which is operationally connected to a device for measuring the rotation speed of the motor, to a device enabling the user to set a desired speed value, and to a three-phase alternating current generator powering at least one induction three-phase electric motor with its rotor short-circuited, said three-phase alternating current generator being of the type able to vary its output voltage and frequency, characterised in that said electronic circuit is further connected to a device enabling the user to set a desired slip value for said motor, in that it comprises a frequency regulating circuit which requires said generator to deliver a current at a frequency equal to the sum of the frequency of rotation of said motor and the desired slip frequency, and in that it comprises a voltage regulating circuit which requires said generator to provide voltage at a value equal to a linear combination of the integral of the difference between the desired speed and the measured speed plus the desired slip, and the measured speed.

Advantageously, the electronic circuit is characterised by further comprising a circuit which recognizes if the vehicle is undergoing braking, said frequency regulating circuit being connected to said braking recognition circuit and requiring said generator, whenever said vehicle is undergoing braking, to deliver a current at a frequency equal to the difference between the frequency of rotation of said motor and the desired slip frequency, said voltage regulating circuit being connected to said braking recognition circuit and requiring said generator, whenever said vehicle is undergoing braking, to provide voltage at a value equal to a linear combination of the integral of the difference between the desired speed and the measured speed less the desired slip, and the measured speed, said voltage regulating circuit being able to change the sign and value of the coefficients of said linear combination depending on whether the vehicle is undergoing braking or not.

In a preferred embodiment, said voltage regulating circuit comprises means enabling the user to set the coefficients of said linear combination.

The structural and operational characteristics and the advantages of a circuit according to the present invention will be more apparent from the description given hereinafter by way of non-limiting example with reference to the accompanying schematic drawings, in which:
Figure 1 is an operational block diagram showing the control system to which a circuit according to the present invention is connected;
Figure 2 is an operational block diagram of a circuit according to the present invention.

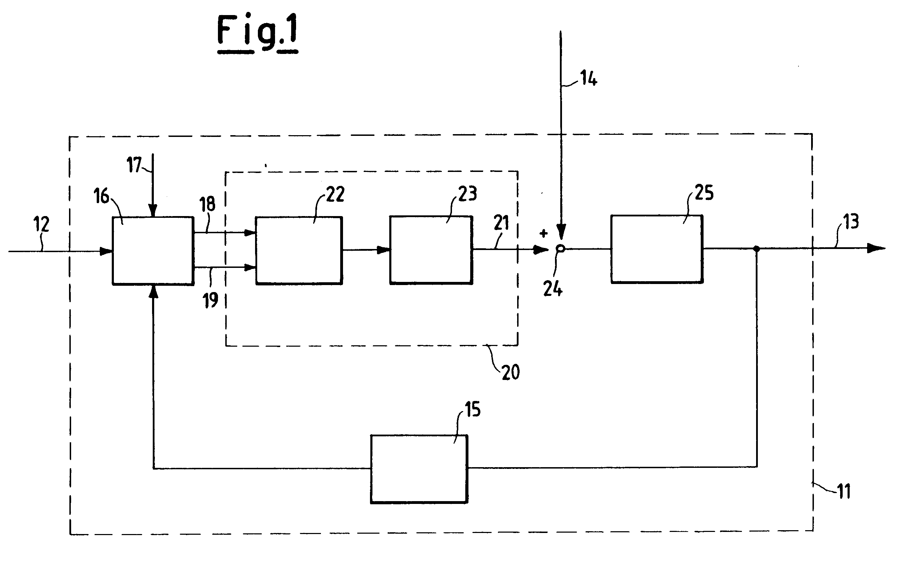

In the accompanying Figure 1, the reference numeral 11 indicates overall a control system for regulating the speed of an electric vehicle.

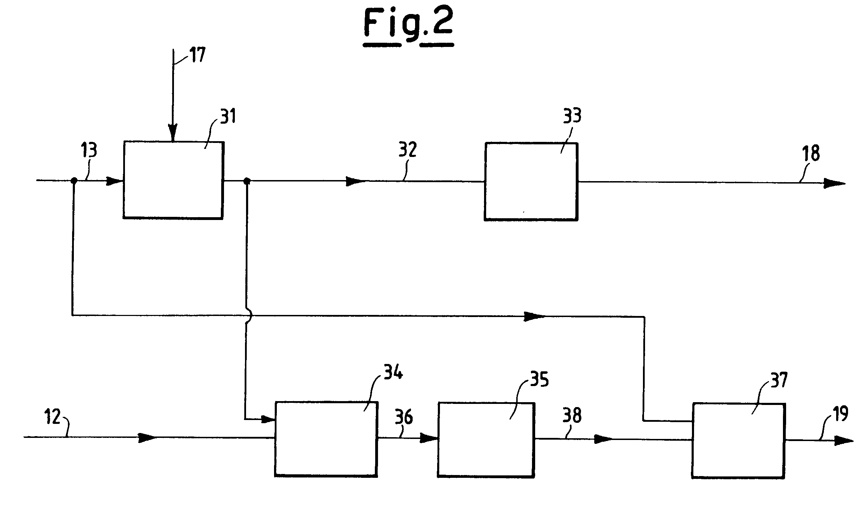

The values of all the quantities, indicated hereinafter with reference to the block diagrams of Figures 1 and 2, are normalized values.

The set-point value for the control system 11 is represented by the speed request 12 by the user. The request 12 is made for example by acting on a potentiometer operable by an accelerator.

The output 13 of the control system 11 is represented by the speed of the electric vehicle, while the resistant torque 14 represents an exogenous variable.

The purpose of the control system 11 is, as far as possible and with regard to the inherent dynamics of the vehicle, to make the effective vehicle speed 13 equal to the speed 12 requested by the user, independently of the disturbance represented by the variation in the resistant torque 14.

The speed 13 is measured for example by a tachometer dynamo 15 and enters an electronic control circuit 16.

The electronic circuit 16, which for the control system 11 represents the regulator, processes the values 12 and 13 while taking also into account a value 17, set at will by the user, which represents the desired slip. The value 12 is set for example by operating a potentiometer.

The two outputs 18 and 19 of the circuit 16 contain control signals relative to a frequency value and a voltage value respectively.

The actuator 20 transforms the requests of the circuit 16 to provide a drive torque at its output 21. The actuator 21 consists of a three-phase inverter 22 and a three-phase induction electric motor 23 with its rotor short-circuited. The inverter 22, powered by direct current, is able to power the motor 23 at variable frequency and voltage independently of the signals contained in the outputs 18 and 19 of the circuit 16.

The resistant torque 14, with negative sign, enters an adder node 24, where it is subtracted from the drive torque 21 delivered by the motor 23.

The difference between the drive torque 21 and the resistant torque 14 enters a block 25 which takes account of the vehicle dynamics.

It is apparent that the system 11, from the manner in which it is structured, represents a feed-back dynamic control system with the facility for nullifying, when the transient has expired, the difference between the desired speed and the true speed, and also for nullifying the disturbance caused by the resistant torque 14.

Advantageously, the motor 23 is also connected to electronic circuits, not shown, for recharging the power storage batteries, not shown, by means of the energy delivered by the motor 23 when operating as a generator.

With reference to Figure 2, which shows the structure of the electronic control circuit 16 in greater detail, the reference numeral 31 indicates a block in which the value of the desired slip frequency 17 is added, when operating as a motor, or subtracted, when operating as a generator, to or from the value of the rotation frequency of the motor 23 relative to the measured speed.

The state of operation as a motor or as a generator is decided by reading the value contained in a memory unit, not shown, which contains the true value if the system 11 is operating as a motor, or the false value if operating as a generator. The value of this memory is updated continuously by checking whether the difference between the rotation frequency relative to the requested speed 12 and the frequency relative to the measured speed 13 is greater or not greater than the value of the desired slip frequency 17. In the first case the induction motor 23 is operating as a motor, whereas in the second case it is operating as a generator.

Advantageously, this memory unit is connected to means, not shown, to cause stop lights to light when the motor 23 is operating as a generator.

The block 33 effects a threshold operation on the output 32 of the block 31, allowing positive values to pass unaltered and giving a zero result for negative values. The output 18 of the block 33 is connected to the inverter 22 to control the frequency of the current emitted by the inverter 22.

The speed 12 requested by the user and the output 32 of the block 31 enter a block 34 which integrates the difference between the speed 12 and the output 32.

The time constant of the integrator block 34 is equal to the time taken by the vehicle to reach maximum speed with maximum acceleration, and the gain is negative.

The block 35 inverts the sign of the output 36 of the integrator 34 if the system 11 is operating as a generator. If however the system is operating as a motor, the block 35 does not perform any operation and allows the value at its input to pass unaltered.

The output 38 of the block 35 is further processed in the block 37. The value of the output 38 is multiplied by a first coefficient and the value of the measured speed 13 multiplied by a second coefficient is subtracted from the result obtained. The resultant value is presented to the output 19 only if positive, otherwise the value presented is zero. If however the resultant value is greater than a saturation value, this saturation value is presented as output.

The value of the first coefficient of the block 37 is such that, with the integrator 34 in negative saturation, the output 19 requires the inverter 22 to provide a voltage such that the motor 23, with its rotor blocked, delivers the desired drive torque.

Advantageously the value of this first coefficient is adjustable by a potentiometer, so that the user can choose the maximum torque value which the motor is required to deliver.

The value of the second coefficient of the block 37 is such that, on the basis of the torque/speed characteristic established for the vehicle, the block 37 presents as output the saturation value starting from a point at which constant power operation begins.

Usefully, the value of this second coefficient is also adjustable by a potentiometer, so that the user can choose the point from which the voltage applied to the motor remains constant.

The output 19 of the block 33 is connected to the inverter 22 to control the feed voltage to the motor 23.

It is apparent that all the functions performed by the constituent blocks of the circuit 16 can be performed using just a few low-cost components, such as operational amplifiers, diodes, etc.

The circuit operates as follows.

When the vehicle is at rest and the accelerator is released, the requested speed 12 and the effective speed 13 are zero. The output 18 of the block 33 is then equal to the desired slip 17, and the output 19 of the block 37 is zero.

Consequently the motor 23 receives zero voltage at the rated slip frequency and remains at rest.

Even when the accelerator is pressed, the output 18 is equal to the rated slip frequency as the effective speed 13 is still zero.

The output of the integrator 34 becomes negative and, as the speed 13 is still zero, the output 19 assumes a positive value and the motor 23 begins to rotate.

The measured speed 13, which has become greater than zero, is then subtracted in the block 37. Consequently the feed voltage to the motor 23 is reduced.

A measured speed greater than zero is simultaneously added in the block 31, and consequently the frequency value increases.

Equilibrium is achieved when the measured speed 13 added to the desired slip value 17 becomes equal to the requested speed 12. In this respect, the output of the integrator 34 is equal to zero in this case, and consequently the output 18 is a function only of motor speed 13. Any variations in the resistant torque 14 which tend to change the motor speed are corrected automatically by the integrator block 34, which regulates the output voltage and hence the delivered torque 21, to maintain the speed at a value equal to the requested speed 12.

It is apparent that during acceleration, as the output 18 is always equal to the effective speed 13 plus the desired slip value 17, the frequency is regulated on the basis of the acceleration capacity of the vehicle. The desired speed is achieved faster the smaller the torque required by the vehicle to accelerate.

When the requested speed 12 is less than the measured speed 13 plus the slip 17, the output 32 of the block 31 becomes equal to the measured speed 13 less the slip value 17.

As the block 35 inverts the sign of the output 36 of the integrator 34, the output 19 assumes a higher value the more the measured speed is greater than the requested speed. Because, this time, the rotation frequency of the motor 23 is greater than the frequency of the feed current, a voltage increase causes an increase in braking torque.

It is apparent that in this manner the integrator 34 regulates the output voltage of the inverter 22, and hence the torque delivered by the motor 23, to maintain the motor slip equal to the desired slip 17.

## Claims

1. An electronic control circuit for induction electric motors driving electric vehicles which is operationally connected to a device (15) for measuring the rotation speed (13) of the motor, to a device enabling the user to set a desired speed value (12), and to a three-phase alternating current generator (22) powering at least one induction three-phase electric motor (23) with its rotor short-circuited, said three-phase alternating current generator (22) being of the type able to vary its output voltage and frequency,
characterised in that said electronic circuit is further connected to a device enabling the user to set a desired slip value (17) for said motor, in that it comprises a frequency regulating circuit (16) which requires said generator (22) to deliver a current at a frequency equal to the sum of the frequency of rotation (13) of said motor and the desired slip frequency (17), and in that it comprises a voltage regulating circuit (16) which requires said generator (22) to provide voltage at a value equal to a linear combination of the integral of the difference between the desired speed (12) and the measured speed (13) plus the desired slip (17), and the measured speed (13).

2. An electronic circuit as claimed in claim 1, characterised by further comprising a circuit which recognizes if the vehicle is undergoing braking, said frequency regulating circuit (16) being connected to said braking recognition circuit and requiring said generator (22), whenever said vehicle is undergoing braking, to deliver a current at a frequency equal to the difference between the frequency of rotation of said motor (13) and the desired slip frequency (17), said voltage regulating circuit (16) being connected to said braking recognition circuit and requiring said generator (22), whenever said vehicle is undergoing braking, to provide voltage at a value equal to a linear combination of the integral of the difference between the desired speed (12) and the measured speed (13) less the desired slip (17), and the measured speed (13), said voltage regulating circuit (16) being able to change the sign and value of the coefficients of said linear combination depending on whether the vehicle is undergoing braking or not.

3. An electronic circuit as claimed in claim 1, characterised in that said voltage regulating circuit (16) comprises means enabling the user to set the coefficients of said linear combination.

4. An electronic circuit as claimed in claim 3, characterised in that said means for setting the coefficients of said linear combination are at least one potentiometer.

5. An electronic circuit as claimed in claim 1, characterised in that said device enabling the user to set a desired speed value (12) is a proportionally variable voltage generator (for example a potentiometer), operationally connected to an accelerator.

6. An electronic circuit as claimed in claim 1, characterised in that said device enabling the user to set a desired slip value (17) is a potentiometer or another programmable device.

7. An electronic circuit as claimed in claim 1, characterised in that said device for measuring the rotation speed (13) of said motor is a tachometer dynamo (15) or another measurement device (for example a phonic wheel).

8. An electronic circuit as claimed in claim 2, characterised in that said braking recognition circuit recognizes whether the vehicle is undergoing braking by checking that the motor rotation frequency (12) desired by the user and the measured motor rotation frequency (13) is less than the desired slip frequency (17).

9. An electronic circuit as claimed in claim 2, characterised in that said braking recognition circuit is further connected to indicator devices for indicating whether the vehicle is undergoing braking.

10. An electronic circuit as claimed in claim 1, which automatically adapts to the induction motor power supply (voltage and frequency) in order to obtain maximum obtainable acceleration under any load or gradient condition, while maintaining slip at the set value (17).

11. An electronic circuit as claimed in claim 10, which automatically adapts to obtain maximum possible deceleration during braking.

12. An electronic circuit as claimed in claim 1, which restricts the maximum current through the motor, under all load conditions, to a preset value without effecting any measurement or limitation thereon, said preset value being adjusted by adjusting the desired slip value (17).

## Patentansprüche

1. Elektronischer Steuerschaltkreis für elektrische Induktionsmotoren zum Antrieb elektrischer Fahrzeuge, welcher im Betrieb an einer Einrichtung (15) zur Messung der Rotationsgeschwindigkeit des Motors, an einer Einrichtung, die dem Benutzer die Einstellung eines gewünschten Geschwindigkeitswertes (12) gestattet, und an einen 3-Phasen-Wechselstromgenerator (22) angeschlossen ist, der wenigstens einen elektrischen 3-Phasen-Induktionsmotor (23) mit Leistung versorgt, wobei sein Rotor kurzgeschlossen ist und wobei der 3-Phasen-Wechselstromgenerator (22) von dem Typ ist, der seine Ausgangsspannung und Frequenz variieren kann, dadurch gekennzeichnet, daß der elektronische Schaltkreis ferner an einer Einrichtung angeschlossen ist, die dem Benutzer die Einstellung eines gewünschten Schlupfwertes (17) für den Motor gestattet, indem sie einen Frequenzregelschaltkreis (16) umfaßt, welcher von dem Generator (22) erfordert, daß er einen Strom mit einer Frequenz entsprechend der Summe der Rotationsfrequenz (13) des Motors und der gewünschten Schlupffrequenz (17) liefert, und daß er einen Spaunungs-Regelschaltkreis (16) umfaßt, welcher erfordert, daß der Generator (22) eine Spannung mit einem Wert liefert, der einer linearen Kombination des Integrals der Differenz zwischen der gewünschten Geschwindigkeit (12) und der gemessenen Geschwindigkeit (13), plus dem gewünschten Schlupf (17), und der gemessenen Geschwindigkeit (13) entspricht.

2. Elektronischer Schaltkreis nach Anspruch 1, dadurch gekennzeichnet, daß er ferner einen Schaltkreis umfaßt, welcher erkennt, wenn das Fahrzeug einer Bremsung unterliegt, wobei der Frequenz-Regelschaltkreis (16) an den Brems-Erkennungsschaltkreis angeschlossen ist und erfordert, daß der Generator (22) immer dann, wenn das Fahrzeug einer Bremsung unterliegt, einen Strom mit einer Frequenz entsprechend der Differenz zwischen der Rotationsfrequenz des Motors (13) und der gewünschten Schlupffrequenz (17) liefert, wobei der Spannungsregelschaltkreis (16) an dem Brems-Erkennungsschaltkreis angeschlossen ist und von dem Generator (22) immer dann, wenn das Fahrzeug einer Bremsung unterliegt, erfordert, daß er eine Spannung liefert mit einem Wert entsprechend einer linearen Kombination des Integrals der Differenz zwischen der gewünschten Geschwindigkeit (12) und der gemessenen Geschwindigkeit (13), vermindert um den gewünschten Schlupf (17), und der gemessenen Geschwindigkeit (13), wobei der Spannungsregelschaltkreis (16) in der Lage ist, das Vorzeichen und den Wert der Koeffizienten der linearen Kombination zu verändern in Abhängigkeit davon, ob das Fahrzeug einer Bremsung unterliegt oder nicht.

3. Elektronischer Schaltkreis nach Anspruch 1, dadurch gekennzeichnet, daß der Spannungsregelschaltkreis (16) Mittel umfaßt, die dem Benutzer die Einstellung der Koeffizienten der linearen Kombination gestatten.

4. Elektronischer Schaltkreis nach Anspruch 3, dadurch gekennzeichnet, daß die Mittel zur Einstellung der Koeffizienten der linearen Kombination wenigstens ein Potentiometer umfaßt.

5. Elektronischer Schaltkreis nach Anspruch 1, dadurch gekennzeichnet, daß die Einrichtung, die dem Benutzer die Einstellung eines gewünschten Geschwindigkeitswertes (12) gestattet, ein proportional veränderbarer Spannungsgenerator ist (beispielsweise ein Potentiometer), der betriebsmäßig mit einem Gaspedal verbunden ist.

6. Elektronischer Schaltkreis nach Anspruch 1, dadurch gekennzeichnet, daß die Einrichtung, die dem Benutzer die Einstellung eines gewünschten Schlupfwertes (17) gestattet, ein Potentiometer oder eine andere programmierbare Einrichtung ist.

7. Elektronischer Schaltkreis nach Anspruch 1, dadurch gekennzeichnet, daß die Einrichtung zur Messung der Rotationsgeschwindigkeit (13) des Motors ein Tachometerdynamo (15) oder eine andere Meßeinrichtung (beispielsweise ein Geräuschrad) ist.

8. Elektronischer Schaltkreis nach Anspruch 2, dadurch gekennzeichnet, daß der Brems-Erkennungsschaltkreis erkennt, ob das Fahrzeug einer Bremsung unterliegt, indem die Motor-Rotationsfrequenz (12), die durch den Benutzer gewünscht ist, und die gemessene Motor-Rotationsfrequenz (13) daraufhin geprüft wird, ob sie geringer als die gewünschte Schlupffrequenz (17) ist.

9. Elektronischer Schaltkreis nach Anspruch 2, dadurch gekennzeichnet, daß der Brems-Erkennungsschaltkreis ferner an Anzeigeeinrichtungen zur Anzeige angeschlossen ist, ob das Fahrzeug einer Bremsung unterliegt.

10. Elektronischer Schaltkreis nach Anspruch 1, welcher automatisch die Versorgungsleistung (Spannung und Frequenz) des Induktionsmotors anpaßt, um eine maximal erzielbare Beschleunigung unter jeglichem Last- bzw. Gradientenzustand zu erzielen, während der Schlupf auf dem eingestellten Wert (17) beibehalten wird.

11. Elektronischer Schaltkreis nach Anspruch 10, welcher sich automatisch anpaßt, um eine maximal mögliche Verzögerung während der Bremsung zu erzielen.

12. Elektronischer Schaltkreis nach Anspruch 1, welcher den maximalen Strom durch den Motor unter allen Lastzuständen auf einen voreingestellten Wert begrenzt, ohne irgendeine Messung oder Beschränkung zu bewirken, wobei der voreingestellte Wert durch Einstellung des gewünschten Schlupfwertes (17) eingestellt wird.

## Revendications

1. Circuit électronique de commande de moteurs électriques asynchrones entraînant des véhicules électriques, qui est connecté fonctionnellement à un dispositif (15) destiné à mesurer la vitesse (13) de rotation du moteur, à un dispositif permettant à l'utilisateur de fixer la vitesse à une valeur (21) souhaitée et à une génératrice (22) de courant alternatif triphasé qui alimente au moins un moteur (23) électrique asynchrone triphasé ayant son rotor en court-circuit, cette génératrice (22) de courant alternatif triphasé étant du type qui est capable de faire varier ses fréquence et tension de sortie, caractérisé en ce que ce circuit électronique est en outre connecté à un dispositif permettant à l'utilisateur de fixer le glissement à une valeur (17) souhaitée pour le moteur, en ce qu'il comprend un circuit (16) de régulation de fréquence qui exige que la génératrice (22) fournisse un courant à une fréquence égale à la somme de la fréquence (3) de rotation du moteur et de la fréquence (17) de glissement souhaitée, et en ce qu'il comprend un circuit (16) de régulation de tension qui exige que la génératrice (22) fournisse une tension égale à la valeur d'une combinaison linéaire de l'intégrale de la différence entre la vitesse (12) souhaitée et la vitesse (13) mesurée plus le glissement (17) souhaité, et de la vitesse (13) mesurée.

2. Circuit électronique selon la revendication 1, caractérisé en ce qu'il comprend en outre un circuit qui reconnaît si le véhicule est en train de freiner, le circuit (16) de régulation de fréquence étant connecté au circuit de reconnaissance du freinage et exigeant que la génératrice (22), lorsque le véhicule est en train de freiner, fournisse un courant à une fréquence égale à la différence entre la fréquence (13) de rotation du moteur et la fréquence (17) de glissement souhaitée, ce circuit (16) de régulation de tension étant connecté au circuit de reconnaissance du freinage et exigeant que la génératrice (22), chaque fois que le véhicule est en train de freiner, fournisse une tension d'une valeur égale à une combinaison linéaire de l'intégrale de la différence entre la vitesse (12) souhaitée et la vitesse (13) mesurée moins le glissement (17) souhaité, et de la vitesse (13) mesurée, ce circuit (16) de régulation de la tension étant capable de changer le signe et la valeur des coefficients de la combinaison linéaire selon que le véhicule freine ou non.

3. Circuit électronique selon la revendication 1, caractérisé en ce que le circuit (16) de régulation de tension comprend des moyens permettant à l'utilisateur de fixer les coefficients de la combinaison linéaire.

4. Circuit électronique selon la revendication 3, caractérisé en ce que ces moyens pour fixer les coefficients de la combinaison linéaire sont constitués d'au moins un potentiomètre.

5. Circuit électronique selon la revendication 1, caractérisé en ce que le dispositif permettant à l'utilisateur de fixer la vitesse à une valeur (12) souhaitée est un générateur de tension à variation proportionnelle (par exemple un potentiomètre), connecté fonctionnellement à un accélérateur.

6. Circuit électronique selon la revendication 1, caractérisé en ce que le dispositif permettant à l'utilisateur de fixer une valeur (17) de glissement souhaité est un potentiomètre ou un autre dispositif programmable.

7. Circuit électronique selon la revendication 1, caractérisé en ce que le dispositif destiné à mesurer la vitesse (13) de rotation du moteur est une dynamo (15) tachymétrique ou un autre dispositif de mesure (par exemple une roue phonique).

8. Circuit électronique selon la revendication 2, caractérisé en ce que le circuit de reconnaissance de freinage reconnaît Si le véhicule est en train de freiner en vérifiant que la différence entre la fréquence (12) de rotation du moteur souhaitée par l'utilisateur et la fréquence (13) de rotation du moteur mesurée est inférieure à la fréquence (17) de glissement souhaitée.

9. Circuit électronique selon la revendication 2, caractérisé en ce que le circuit de reconnaissance du freinage est en outre connecté à des dispositifs indicateurs indiquant si le véhicule est en train de freiner.

10. Circuit électronique selon la revendication 1, qui s'adapte automatiquement à la puissance d'alimentation du moteur asynchrone (tension et fréquence) afin d'obtenir l'accélération maximale obtenue quelle que soit la pente ou la charge, tout en maintenant le glissement à la valeur (17) fixée.

11. Circuit électronique selon la revendication 10, qui s'adapte automatiquement afin d'obtenir la décélération la plus grande possible pendant le freinage.

12. Circuit électronique selon la revendication 1, qui restreint le courant maximal passant dans le moteur, sous toute condition de charge, à une valeur fixée à l'avance sans en effectuer de mesure ni de limitation, cette valeur fixée à l'avance étant ajustée par ajustement de la valeur (17) de glissement souhaitée.
